# EUROPEAN PATENT APPLICATION

(11) **EP 1 037 154 A2**
(43) Date of publication of application: **20.09.2000**
(21) Application number: 00302213.4
(22) Date of filing: 17.03.2000
(51) Int. Cl.: G06F 17/50

(54) **Method for data conversion between three-dimensional cad data and data according to the international standardization organization standard, and apparatus using the same**

(30) Priority: 18.03.1999 JP 7344899
(71) Applicant: Hitachi, Ltd., Chiyoda-ku, Tokyo 101-8010 (JP)
(72) Inventor: Araki, Kenji, Mito-shi, Ibaraki 310-0021 (JP); Kibushi, Haruo, Hitachi-shi, Ibaraki 317-0052 (JP)
(74) Representative: Hackney, Nigel John

(57) **Abstract**

A method of converting data between CAD data for a three-dimensional structural object created with a CAD system and data according to the International Standardization organization standard (ISO data), reads out each item of part information corresponding to either of each part and a part ID particular to each part, with which the part is labelled, from CAD data which includes part information including shape and size, whose description area is prepared in a data structure of ISO data, and each item of non-defined attribution information including material and special specification, whose description area is not prepared in the data structure of the ISO data; and inputs the non-defined attribution information to a description area of a predetermined part-definition area for each part in the ISO data by separating the respective items of the attribution information and serially connecting the separated respective items, or by describing each item of the attribution information with a paired format of (attribution item: value of the attribution item).

## Description

The present invention relates to a method for data conversion between general-purpose CAD data for three-dimensional structures, and data according to the International Standardization Organization (ISO) standard.

CAD (Computer Aided Design), which stores models of three-dimensional structures in a computer and aids in the design process from a conceptual design to a detailed layout of a system composed of three-dimensional structures, is widely used. Data conversion between different types of CAD data systems has been frequently performed through the medium most popular format for CAD data. For example, Japanese Patent Application Laid-Open Hei 7-65056 discloses that when data for drawings used in a foreign CAD system is received, American National Standards Institute (ANSI)-type data is first converted to Japan Industrial Standards (JIS)-type data used as an intermediary.

By the way, the function of a CAD system on the market is continually improved corresponding to technological progress or the needs of users. The discrepancy between the data structures of different types of CAD systems has therefor become more significant, which in turn makes data conversion between different types of CAD data difficult.

On the other hand, in accordance with the globalization of industries, data standardization by the International Standardization Organization in each technical field has been improved, and the ISO10303 for the plant-processing technical field has also been constructed. Thus, lately, a method for data conversion between different types of CAD data by using the data converted according to ISO10303 as an intermediary, has become of general interest.

Data conversion between CAD data for three-dimensional structures and CAD data (hereafter referred to as ISO data) standardized by the ISO was recently attempted. However, it was found that the data structure of ISO data cannot completely incorporate the CAD data for three-dimensional structures, and therefore a part of the CAD data for three-dimensional structures cannot be converted to ISO data.

Since each of the ISO10303 standards is established based on an agreement among the related industries in various countries, the ISO standards inevitably lag behind the latest technique. On the other hand, CAD systems on the market tend to reflect the future trend in industrial techniques faster, because there is a constant effort to improve the functions of the CAD systems on the market, corresponding to progress in industrial techniques and the needs of users, or to the sales strategies of the CAD systems. Therefore, there is a inevitable, substantial gap between general-purpose CAD data on the market and ISO data, and even in the future, it cannot be hoped that the ISO10303 standard will offer data structure sufficient for all kinds of industries. Thus, the detailed information must be incorporated into general-purpose CAD data, making us of ISO data with insufficient data-definition ability.

Preferably an object of the present invention is to solve the above ISO data problem, and to achieve a method or an apparatus for data conversion without excess and deficiency, between various types of CAD data and ISO data.

In a first aspect, in the present invention, each item of part information is read out corresponding to each part or a part ID (identification) reference symbol (referred to simply as a part ID) particular to each part, with which the part is labeled, from CAD data which includes part information such as shape, size, and so on, whose description area is included in a data structure of the ISO (ISO data); and each item of part information (referred to as non-defined attribution information) such as material, special specification, and so on, whose description area is not included in the data structure of the ISO data; and the non-defined attribution information is input to the description area of a predetermined part-definition area prepared for each part in the data structure of the ISO data.

The above predetermined part-definition area is a part-classification definition area "entity_system" prepared for each part, or a definition area prepared for a component or system of the upper class of a plurality of parts in the ISO data.

The non-defined attribution information is input in the description area by describing it with a space between words, and/or by writing the part ID corresponding to the part in place of it attributions. Moreover, if there is a non-defined attribution common to a plurality of parts, the respective part IDs of the plurality of parts are input to the description area of a definition area of an upper class on the plurality of parts.

In a second aspect, the present invention provide a method for data conversion, wherein when CAD data are converted to ISO data, each item of part information is read out corresponding to each part or a part ID (identification) reference symbol (referred to simply as a part ID) particular to the part, with which the part is labeled , from CAD data which includes part information such as shape, size, and so on, whose description area is included in the ISO (ISO data), and each item of the non-defined attribution information such as material, special specification, and so on, whose description area is not included in the data structure of the ISO data; and the non-defined attribution information is input to the description area of a predetermined part-definition area prepared for each part in the data structure of the ISO data; and when the ISO data including the non-defined attribution information is converted to the CAD data, each item of the non-defined attribution information read out from the description area in the ISO data is added to the part information corresponding to each part or each part ID.

Preferably, according to the present invention, even if ISO data with less sufficient part-definition areas is used in comparison with general-purpose CAD data, since detailed information for each part can be given without excess and deficiency, data conversion between ISO data according to an ISO standard -for example, ISO10303-227, and local CAD data, or between different types of CAD data systems used in th domestic country or foreign countries, becomes possible.

### BRIEF DESCRIPTION OF THE DRAWINGS

Fig. 1 is a schematic block diagram showing the composition of an apparatus for converting data between three-dimensional CAD data and data (ISO data) standardized by the International Standardization Organization, of an embodiment according to the present invention.

Fig. 2A and 2B are diagrams showing the data structure of general-purpose CAD data, in which data of a plant are stored as an example.

Fig. 3 is an illustration depicting the data structure of the plant's CAD data, which accords to the ISO10303-227.

Fig. 4 is an illustration depicting the data structure, which describes part information, in CAD data according to an ISO standard.

Fig. 5 shows illustrations depicting examples of the data representation method of describing part information using the "entity_system" prepared in the data structure according to an ISO standard.

Fig. 6 is a flow chart showing a method for data conversion from CAD data to ISO data, of the embodiment according to the present invention.

Fig. 7 is a flow chart showing a branch from the flow chart shown in Fig. 6.

Fig. 8 is an illustration showing another example of defining the part information of a plant in the data structure of the ISO data.

Fig. 9 is an illustration depicting examples of the storage states of the non-defined attributions of two system elements, which have been converted from CAD data to ISO data in accordance with the present invention.

### DETAILED DESCRIPTION OF THE EMBODIMENTS

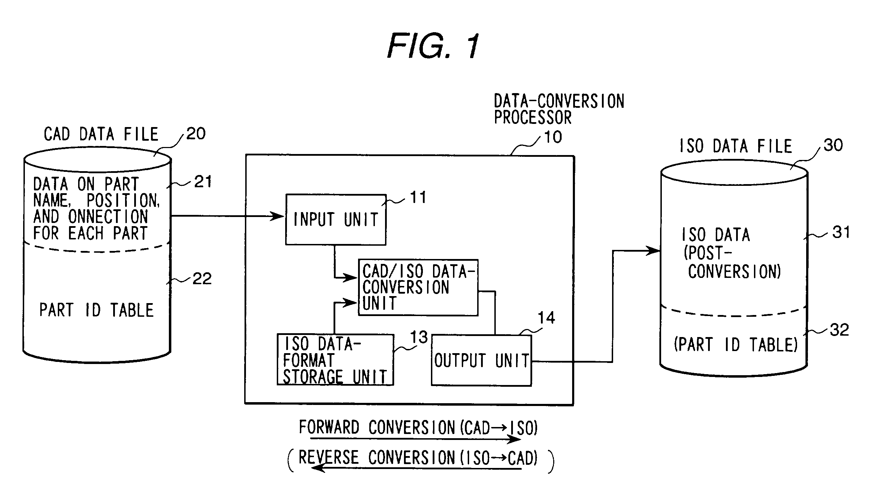

Hereafter, details of the embodiments will be explained with reference to the drawings. Fig. 1 shows the schematic composition of an apparatus for conversing data between three-dimensional CAD data and data (ISO data) standardized by the International Standardization Organization of an embodiment according to the present invention. This apparatus includes a CAD data file 20 which stores data created by a three-dimensional CAD system, a data-conversion processor 10 for converting CAD data to ISO data, and an ISO data file 30 for storing data converted to ISO data. The data-conversion processor 10 is a computer system including an input unit 11 to input data from the CAD data file 20, a CAD/ISO data-conversion unit 12, an ISO data-format storage unit 13, and an output unit 14 to output data to the ISO data file 30. Data can be output from the output unit 14 to a display device or a printer which is not shown in this figure.

In this embodiment, the data-conversion unit 12 inputs part of the CAD data, which is defined in the ISO data, in the corresponding defined area in the data structure of the ISO data, and converts the remainder of the CAD data, which is not defined in the ISO data, to ISO data with a conversion method to be discussed later. If a conversion method which inputs part IDs to the ISO data in place of attributions of the corresponding parts is used, a relational table 32 between part IDs and CAD part information for reading the corresponding CAD part data by referring to each part ID -that is, a part ID table- is passed to the ISO data file 30 along with the converted ISO data 31.

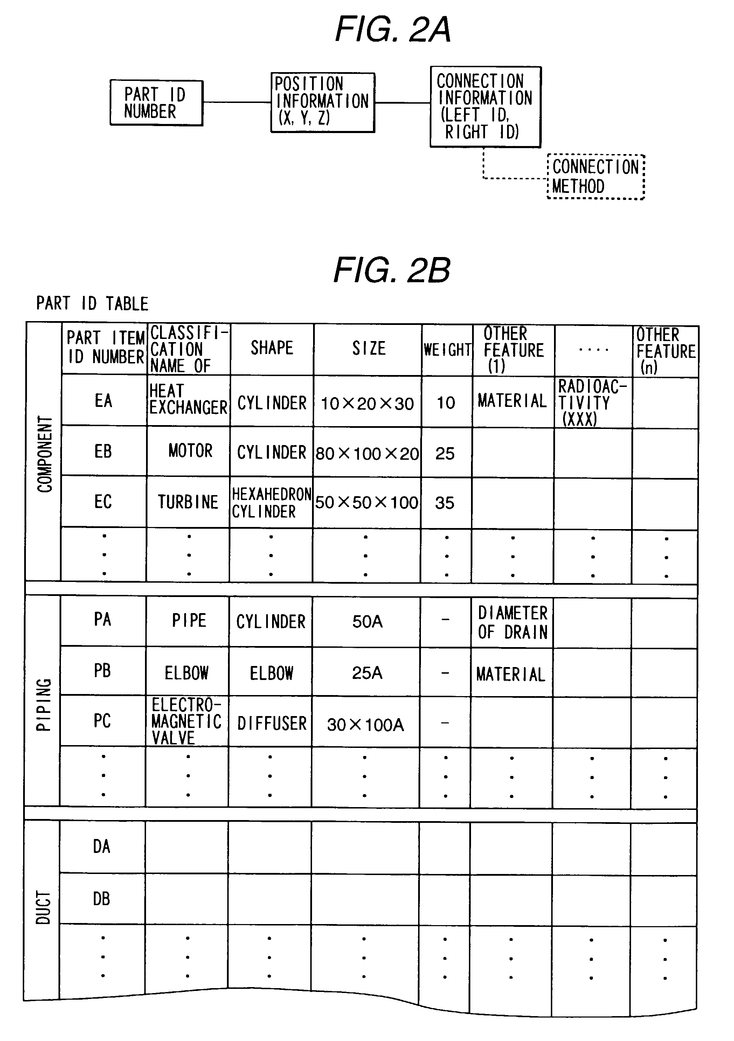

Fig. 2A and 2B shows an example of the data structure of general-purpose CAD data for three-dimensional structures. Fig. 2A shows the fundamental data structure of the CAD data, which is composed of each part, its position information, and its connection information. The connection information is defined by values the (x, y, z) of its coordinates. The connection information is shown by the part IDs of parts connected to the left and right sides, and the top and bottom of the noted part. Moreover, a connection method -for example, welding, flange connection, etc.- is generally added to the connection information.

Fig. 2B shows an example of the part ID table, and the table is created by data groups for the respective types of elements which compose a plant system, such as components, piping systems, ducts, etc. Further, in the table, a classification name, shape, size, weight, and attribution information, which is important to design the plant system, are defined with respect to a part ID reference symbol allocated specifically to each part (referred to as a part ID). Here, a part in the CAD data and the ISO data indicates a minimum unit of elements -that is, small size parts such as a straight pipe, an elbow, etc., large elements such as a component which is not further decomposed during its use, and so forth.

In the part ID table, information on each part, which are described in the part ID table, such as the part ID and the classification name of part, is collectively named attribution information. E, P, and D are set as the initials of part IDs for components, pipe elements, and ducts, respectively, so as to make the corresponding relationship between the data format of the CAD data and that of the ISO data clear. The table can also be created by the data groups for the respective systems which compose the plant system.

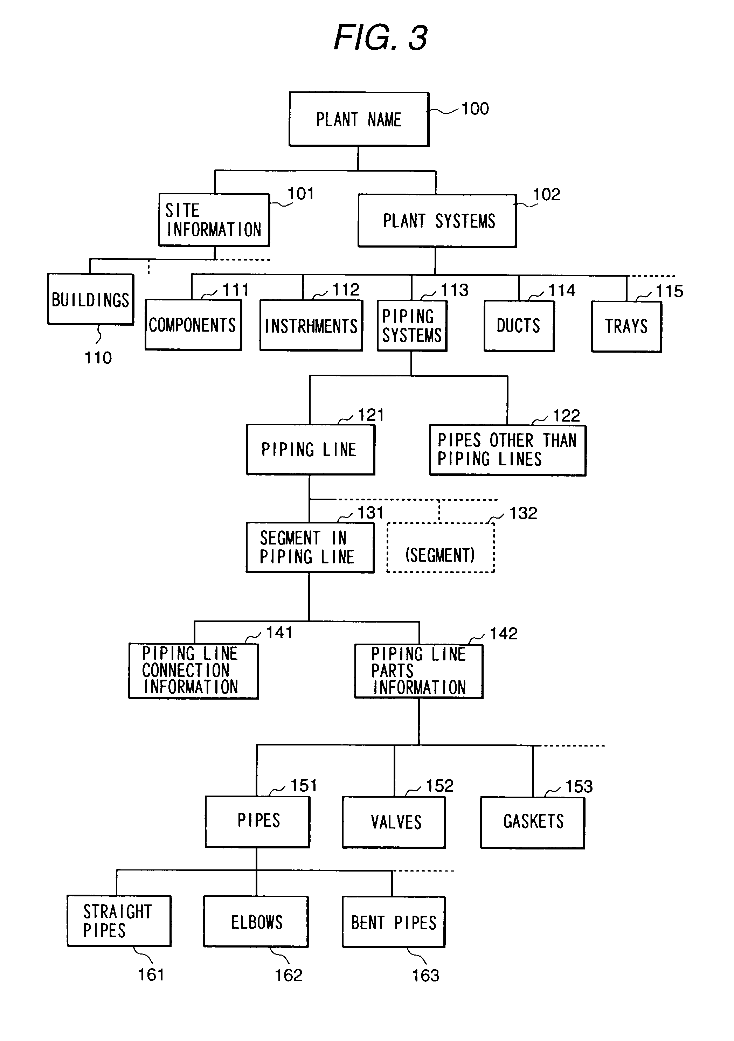

Fig. 3 shows the data structure of CAD data of a plant, which are recorded in ISO data format such as ISO10303-227, and the data structure for a whole plant system is hierarchically defined. Information on the whole plant system is largely classified into information on the site 101 of the plant and on the systems 102 composing the plant, under the plant name 100, and information on civil structures such as buildings 110 is defined in the information on the site 101. The information on the systems 102 is further classified into system elements such as components 111, instruments 112, piping systems 113, ducts 114 (air conditioning systems), trays 115, and installations such as racks, which are not shown in this figure. The dotted lines in this figure indicate that there are other classified items which are not shown in this figure.

Each piping system 113 is divided into a piping line 121 and pipes 122 other than the piping line 121. Further, the piping line 121 includes one or more segments 131 composing the line 121, and information 141 on connection of the line 121 and information 142 on the parts in the line 121 are described under the segments 131. The information 142 on the parts in the line 121 corresponds to respective parts such as pipes. Furthermore, the information 142 on parts in the line 121 is classified into information on elements composing the piping line 122 such as pipes 151, valves 152, gaskets 153, and so on. Moreover, the information on each of the pipes 151 is further finely classified into information on strait pipes 161, elbows 162, bent pipes 163, and so on. Detailed part information is stored in a data area for each element in each pipe 151, in the lowest class.

In this way, in the ISO data structure, information on the pipe systems is hierarchically classified in multiple layers, which in turn makes it possible to easily refer to information on a specific element. This hierarchical data structure is effective for constructing a plant by connecting components, which are arranged in the site of the plant, with piping systems, each of which is composed by assembling the various types of part elements which compose the piping system. On the other hand, lower elements are not defined in other systems such as components 111, ducts 114, structures 110, and so on, and only the name is defined for each of such system elements and structures. This is because if only a classification name of each system element, for example, ."heat exchanger," is known for the components 111, it is possible to buy and install such system elements, and specific information on the parts composing each system element is not necessary.

However, actually, there are usually various kinds of attribution information on each of the components 111 in the CAD data, and if an area in which such attribution information is defined is not prepared in the ISO data, it is impossible to convert the CAD data to the ISO data. Further, in the information on the pipe 151 as well, information on some attributions of parts, such as material, detailed sizes, etc., cannot be described in the ISO data.

In a data structure according to ISO data standards such as ISO10303-227, in addition to the hierarchical data description for engineering, shown in Fig. 3, data-description areas are prepared to define the part data for each of elements in the lowest class.

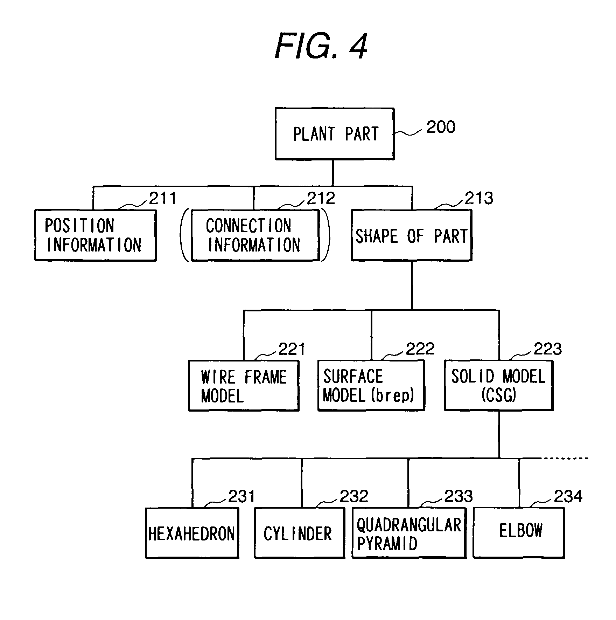

Fig. 4 shows the data structure, which describes part information, in CAD data according to an ISO standard. This data structure for part information includes the name area (name) 200 for each system element such as "component," "pipe," etc., and for each part such as "heat exchanger," "valve," etc., is defined in an area prepared as the name area. Further, the position 211, the connection 212, and the shape 213 of the part are defined in the information in the lower class below the name. The information on the position 211 is the three-dimensional coordinates, and corresponds to the position information (x, y, z) in the CAD data. Although the information on the connection 212 corresponds to the connection information in the CAD data, this information is actually defined by describing the information on the connection relationship of each part in the definition area for each system element (the box 200 for the name area).

The shape of each part is described in three representation models of a wire-frame model 221, a surface model (brep) 222, and a solid model (CSG) 223. The solidmodel (CSG) 223 which is frequently used in three-dimensional CAD is classified into the fundamental shapes of a hexahedron 231, a cylinder 232, a quadrangular pyramid 233, an elbow 234, and so on. This fundamental information in the lowest class corresponds to shape and size information in the CAD data.

The box 200 for a name of each part corresponds to an element in the lowest class, such as the system element shown in Fig. 3. For example, when the data for a classification name "valve" is defined in the data structure for a part shown in Fig. 4, it means that part information on "valve" 152 shown in Fig. 3 is defined. Therefore, both a top-down search based on the data structure shown in Fig. 3 and a bottom-up search based on the data structure shown in Fig. 4 are applicable to a search for part information. Here, the data structure of the ISO data is described in a format table, and is stored in ISO data-format storage unit 13 of the data-conversion processor 10, which is referred to in the data-conversion process.

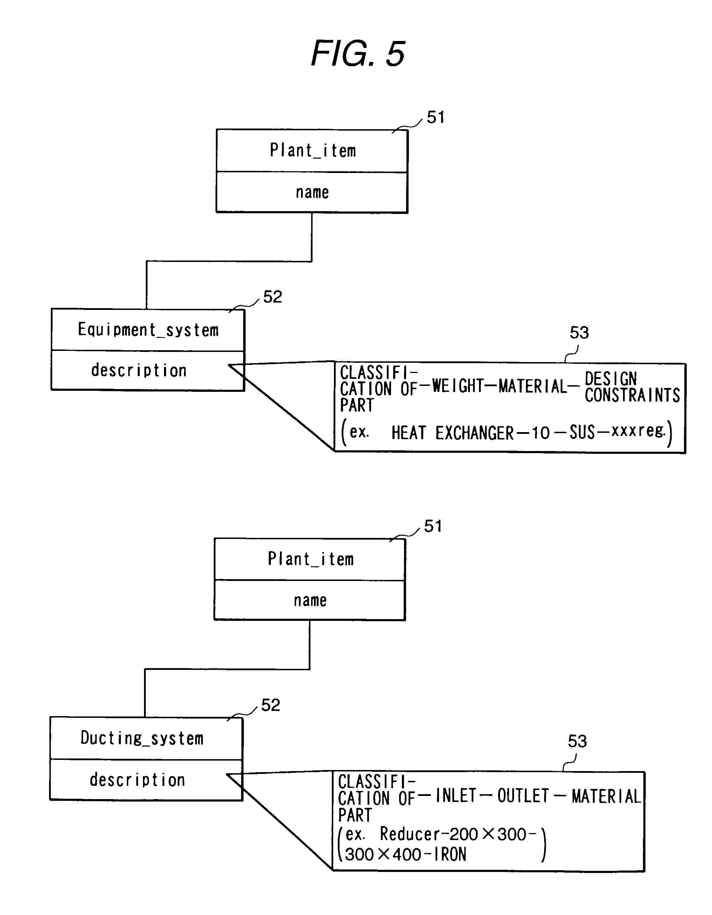

Fig. 5 shows examples of the data representation method of describing part information in CAD data with the ISO10303-227 format. Information on each part of the plant is stored in the definition areas "Plant_item" 51 and "entity_system" 52 prepared in the data structure for each part. Diagram (a) shows an example of a system element a component. In this example, "component", "Equipment_system", and a classification name "heat exchanger" are stored in "Plant system" 51, "entity_system" 52, and the description area 53 of "Equipment_system," respectively. Also, Diagram (b) shows an example of an system element of a duct. In this example, "component", "Ducting_system", and a classification name "Reducer" are stored in "Plant_system" 51, "entity_system" 52, and the description area 53 of "Ducting_system," respectively. In this embodiment, not only a classification name but also attribution information whose definition area is not included in the ISO data, such as weight, material, etc., which are included in the CAD data, are stored by a serial description method in which the respective attribution data is serially connected with a hyphen. The above serial description of the respective attribution data can be done with not only a hyphen but also a slash, a dot, parentheses, etc. Further, a description method other than the serial description method can be used. For example, a paired description method in which each attribution of a part is described by a paired description (attribution item: attribution value) such as (material: SUS304), can also be used.

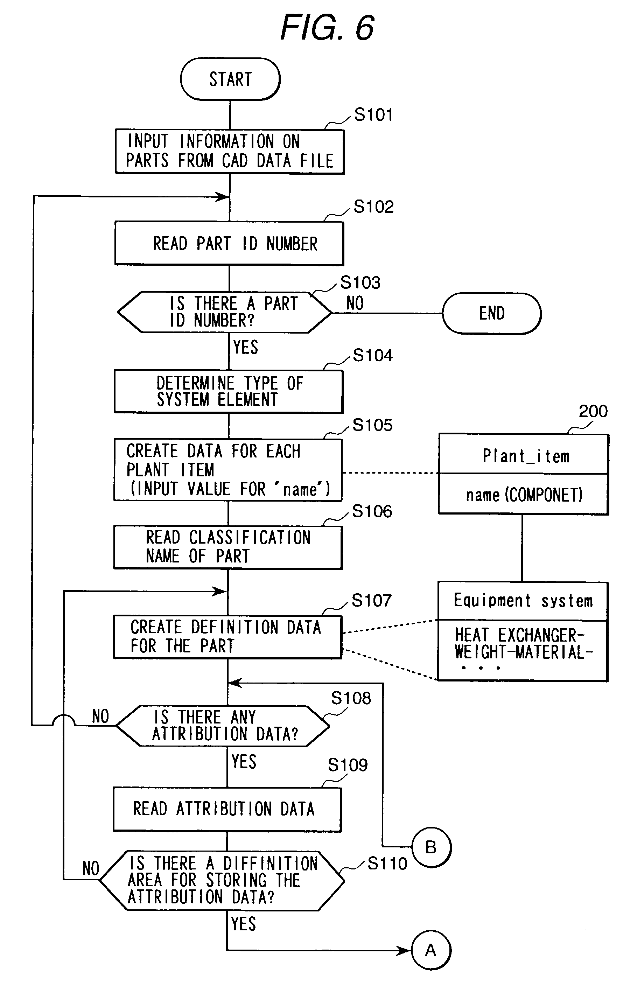

In the following, operations of the apparatus of this embodiment, for data conversion between CAD data and data according to the International Standardization Organization standard (ISO data,) will be explained. Fig. 6 is a flowchart showing an example of a method for data conversion from CAD data to ISO data. First, in step S101, information on parts in CAD data is read from the CAD data file 20. This information on parts includes the position and connection information for each part, and the contents defined in the part ID table 22 in Fig. 1.

Next, in step 5102, the part IDs are read one by one in order of storage, and the below-explained processes is repeated for each part in step S103. First, in step 5104, the classification name of a system element corresponding to the read-out part ID, which is defined in the ISO data, is determined from the initial of the read-out part ID. For example, initials E, P, and D indicate components 111, pipes 113, and ducts (air conditioning facilities) 114, respectively. Next, in step S105, "Plant_item" corresponding to the system element is set. Hereafter, the processes will be explained using "component" as an example for the system element. As shown in Fig. 6, "component" is stored in "name" of "Plant_item."

Further, in Step s106, "classification name" is read from the information on the read-out part ID, which is described in the row corresponding to the read-out part ID in the part ID table 22. Furthermore, in step S107, a description area for the "component" is prepared, and the read-out information on the "component" is defined in the description area as shown in Fig. 6. That is, for the "component," "Equipment_sytem" is set, and "heat exchanger" is stored in the description area of "Equipment_system" as a classification name of the "component".

In step S108, whether or not there is any attribution information described in the row corresponding to the read-out part ID in the part ID table 22 is checked, and if there is attribution information, the attribution information is read from the row in order in step s109. Further, in step s110, it is determined whether or not there is an area, in which the read-out information on the read-out part ID is stored in the data structure of the ISO data, and if there is such an area, the process returns to step S107 in order to input the information: for example, attributions such as "weight," in the description area "description" of the "Equipment_system," which is input by serially connecting the attributions with a hyphen. In step S108, if it is determined that the processes of data-reading and storing have been completed for all attributions described in the row corresponding to the read-out part ID in the part ID table 22, the process returns to step S102, and the next part ID is read from the table 22.

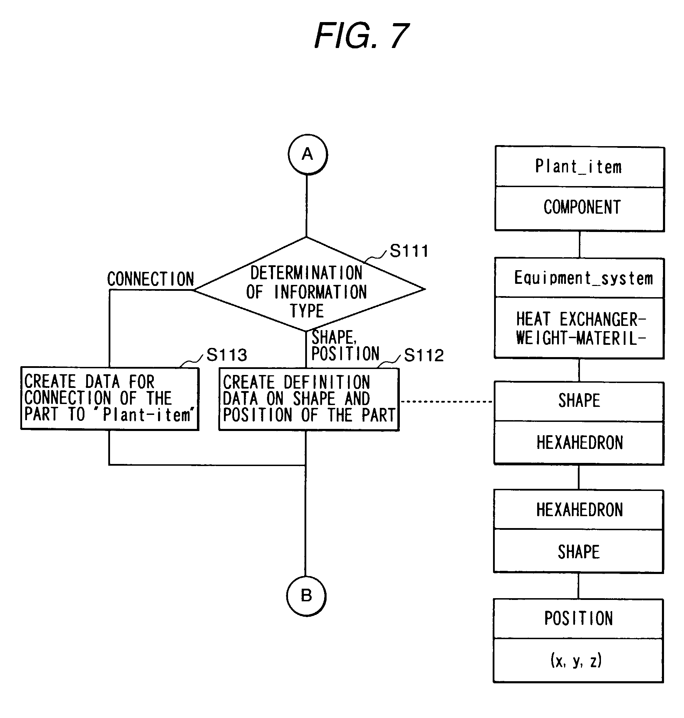

Conversely, if there is an area in the data structure of the ISO data in which the read-out information on the read-out part ID is stored, the process enters a branch procedure shown in Fig. 7 from inlet A. First, in step S111, it is determined which, among the shape, position information, or connection information the read-out information is, and if the read-out information is shape or position information, the shape or the position is defined in the ISO data. That is, there is a description area "description" for "shape" under the definition area of the "Equipment_system", and "hexahedron" is stored in the "description," and "size" is stored in a description area for the "hexahedron" prepared under the description area for the "shape." Further, a description area for "position" is provided, and the position information -that is, the coordinates (x, y, z)- of the read-out part, for example, a heat exchanger, is stored in the description area for "position".

If the attribution information is connection information, the connection information which is defined by the part IDs of the parts adjacent to the left and right sides of the part corresponding to the read ID is stored in a description area for "connection" provided under the "Plant_item" in step S113. Further, if the data-input process for the attribution information for which the description area is prepared in the ISO data has been completed, the procedure re-enters the process shown in Fig. 6 from inlet B.

Meanwhile, it is possible to use an identifier for the determination executed in step S110 on whether or not there is an area in the data structure of the ISO data, in which the read-out information on the read-out part ID is stored,.

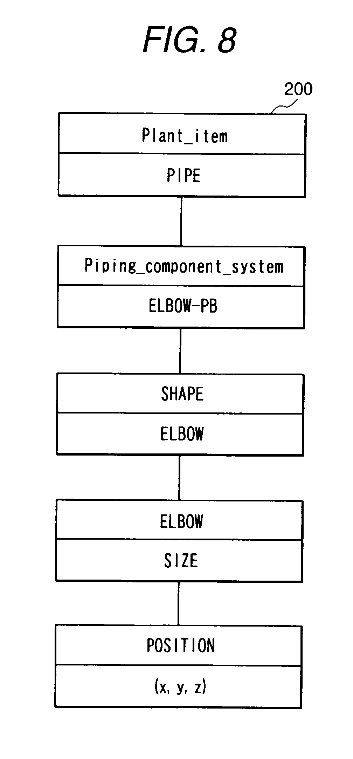

Fig. 8 is an illustration showing another example of defining the part information of a plant in the data structure of the ISO data. In this example, the classification name of the part is "elbow," and the classification name "elbow" and the part ID "PB," which are serially connected by a hyphen, are input to a description area "description" for "Piping_coponent_system," That is, the part "PB" of the elbow is input in place of each item in the attribution information for the elbow, whose description area is not included in the ISO data. In this method, if the part ID table 32 for parts described in the CAD data is prepared in the ISO data file 30 as shown in Fig. 1, all items in the attribution information corresponding to each part can be referred to simply by designating their part IDs.

Further, it is possible to input only the part ID and omit the classification name of the part. Moreover, attribution information common to a plurality of parts, and whose description area is not included in the ISO data, can be collectively stored in a description area for the system elements of an upper class. For example, when material common to straight pipe 161, elbow 162, and bent pipe 163 is defined, there is a description area for the pipe 151, and "straight pipe," "elbow," and "bent pipe" are serially connected with hyphens and stored in the description area.

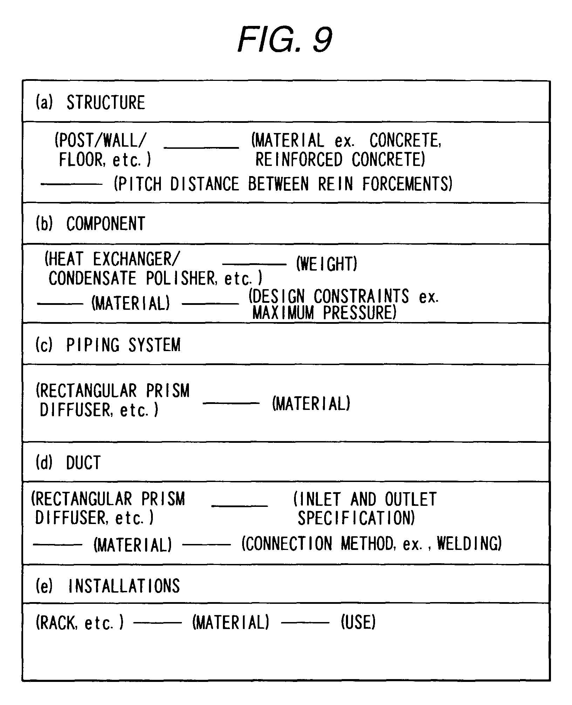

Fig. 9 shows examples of the stored attributions of each system element, which are not defined in the ISO data, and are converted from CAD data to ISO data in accordance with the present invention. Using "structure" as an example, the material of walls, the pitch between reinforcement bars, etc., can be stored in a description area for "structure." Further, for "duct," the specifications of the inlet and outlet are defined in addition to the size of "shape." Moreover, for "facility," the usage, material, etc., of "rack for operations" are defined.

In accordance with the above embodiments, in data conversion between CAD data and data according to an ISO standard such as the IS010303 standard, attribution information for each part defined in the CAD data, which is not included in the data structure of the ISO data, can be input to the description area "description" for "entity_system" in which only a classification name is originally defined in the data structure of the ISO data. Thus, for example, it has become possible to convert three-dimensional CAD data on the market to data according to the ISO10303 standard.

Further, data conversion between different types of CAD data has also become possible by using CAD data converted according to an ISO standard as an intermediary. Data conversion from the ISO data to CAD data can be implemented by the reverse conversion processing of the above-described forward conversion process. That is, in this reverse conversion processing, information stored in the description area "description" for the "entity_system" in the ISO data is stored in each corresponding area for attribution information, which is prepared in the part ID table, in the CAD data.

Although the present invention is explained in the above embodiments, using the ISO10303-227 standard as an example of ISO standards the present invention can be applied to not only ISO data according to the ISO10303-227 standard but also ISO data whose data structure includes an attribution description area for each part, as mentioned below.

In the following, the above-used specific terms are defined to make the present invention clear.

The term "ISO data" or the term "data according to the International Standardization Organization Standard" indicates the data according to the data structure prescribed by the International Standardization Organization Standard 10303 (ISO10303). In some of the above embodiments, the ISO data or the data according to the International Standardization Organization Standard specifically indicates the data according to the International Standardization Organization Standard 10303-227 (ISO10303-227). Here, the ISO10303 is the standard to standardize the data for CAD systems used in the manufacturing industries, and it prescribes the structure of the data used for manufacturing cars, ships, process plants, and the like. Since the above ISO data -that is, the data according to the ISO10303- includes the data according to the ISO10303-221,n 225, 227, and 231, the structure of the data used in each step of designing a process plant can unitarily be standardized by the ISO10103.

Further, the term "CAD data" or the term "part data" includes "attributions" "the position", the data for specifying "the shape" of the object part. Here, the "part" means one of elements composing a structural body, and is a minimum unit-element which can be treated in the design of the structural body. However, in the standards other than the ISO10303-227, the term "part" sometimes includes a fundamental structure composed of "parts". Also, the term "shape" includes "fundamental figure" and "fundamental part shape". The term "fundamental figure" indicates each shape defined by the ISO103303-42, and the term "fundamental part shape" is a shaped of a part, which is specified by the combination of a plurality of "fundamental figures".

Furthermore, the term "part information" is the information defined as "part data".

Moreover, the term "classification name of part" is a name given to each part in a group of parts, each groug being classified based on its function or shape.

Still further, the term "connection information" is the information for designating parts which are connected to the object part, and methods to connect the parts to the object part, and this information is included in "attributions" of the object part.

In addition, the "different types of CAD data systems" means different CAD systems which use CAD data composed with different data structures.

According to the present invention, since plant data described in three-dimensional CAD data on the market are sufficiently converted to data (ISO data) created based on an ISO standard such as the ISO10303-227 standard by inputting information on parts described in the CAD data, whose description area is not prepared in the ISO data, in a description area "entity_system" used for defining a classification name of each part, prepared in the data structure of the ISO data, CAD data can be unitarily treated via ISO data which can be commonly used in the world, which in turn greatly contributes the globalization of industry. Also, since data conversion between different types of CAD data systems has become possible, redesign or mis-design due to discrepancies between data structures in different types of CAD data can be significantly removed, and this can improve data has become possible, redesign or mis-design due to discrepancies between data structures in different types of CAD data can be significantly removed, and this can improve the cooperation between different-type manufactures or different.

## Claims

1. A method of converting data between CAD data for a three-dimensional structural object created with a CAD system and data according to the International Standardization Organization standard (ISO data), wherein each item of part information is read out corresponding to either of each part and a part ID particular to each part, with which said part is labeled, from CAD data which includes part information including shape and size, whose description area is prepared in a data structure of ISO data, and each item of non-defined attribution information including material and special specification, whose description area is not prepared in said data structure of said ISO data; and said non-defined attribution information is input to a description area of a predetermined part-definition area for each part in said ISO data.

2. A method according to claim 1, wherein said predetermined part-definition area is a definition area, that is, "entity_system", which is prepared for each part in said data structure of said ISO data.

3. A method according to one of claim 1 and claim 2 , wherein items of said non-defined attribution information are stored in said description area of said part-definition area for each part by separating said respective items and serially connecting said separated respective items.

4. A method according to one of claim 1 and claim 2, wherein items of said non-defined attribution information are stored in said description area of said part-definition area for each part by describing each item with a paired format of (attribution item: value of said attribution item).

5. A method according to one of claim 1 and claim 2, wherein if part information on a part includes said non-defined attribution information, said part ID of said part is input to said description area of said part-definition area for said part.

6. A method according to claim 1, wherein if there is the non-defined attribution information common to a plurality of parts which are included in the same upper-class system element, part IDs of said plurality of parts are input in a description area of a definition area for said upper-class system element.

7. A method of converting data between CAD data for a three-dimensional structural object created with a CAD system and data according to the International Standardization Organization standard (ISO data), wherein when said CAD data is converted to said ISO data, each item of part information is read out corresponding to either of each part and a part ID particular to each part, with which said part is labeled, from CAD data which includes part information including shape and size, whose description area is prepared in ISO data, and each item of non-defined attribution information including material and special specification, whose description area is not prepared in said data structure of said ISO data; and said non-defined attribution information is input to a description area of a predetermined part-definition area for each part in said ISO data; and
when said ISO data including said non-defined attribution information is converted to said CAD data, each item of said non-defined attribution information read out from said description area in said ISO data is added to said part information corresponding to each part or each part ID.

8. An apparatus for converting data between CAD data for a three-dimensional structural object created with a CAD system and data according to the International Standardization Organization standard (ISO data), said apparatus comprising:
CAD data storage means for storing CAD data which includes part information including shape and size, whose description area is prepared in a data structure of ISO data, and each item of non-defined attribution information including material and special specification, whose description area is not prepared in said data structure of said ISO data;
ISO data storage means for storing converted ISO data in which a part-definition area for each part and a description area for storing each of attributions of said part, said attributions including material and special specification, are prepared; and
data conversion means for reading out each item of part information corresponding to either of each part and a part ID particular to each part, with which said part is labeled, and for inputting said non-defined attribution information to said description area of said part-definition area for each part in said ISO data.
